# EUROPEAN PATENT APPLICATION

(11) **EP 3 053 829 A1**
(43) Date of publication of application: **10.08.2016**
(21) Application number: 14850209.9
(22) Date of filing: 03.10.2014
(51) Int. Cl.: B64D 11/00, B32B 21/08

(54) **AIRCRAFT INTERIOR PANEL MATERIAL AND MANUFACTURING METHOD THEREFOR**

(30) Priority: 03.10.2013 JP 2013207834; 07.04.2014 JP 2014078369
(71) Applicant: The Yokohama Rubber Company, Limited, Tokyo 105-8685 (JP)
(72) Inventor: TAGUCHI, Yuji, Hiratsuka-shi Kanagawa 254-8601 (JP); KOBAYASHI, Takafumi, Hiratsuka-shi Kanagawa 254-8601 (JP); HIROSE, Ayano, Hiratsuka-shi Kanagawa 254-8601 (JP)
(74) Representative: Dilg, Haeusler, Schindelmann Patentanwaltsgesellschaft mbH
(86) International application number: PCT/JP2014/076508
(87) International publication number: WO 2015/050239

(57) **Abstract**

Provided is an aircraft interior panel material and a manufacturing method thereof whereby requirements of cost reduction, strength, rigidity, flame retardancy, weight reduction are satisfied and environmental impact is reduced. The aircraft interior panel material (10A) includes a core member (12), and surface members (14) attached to both surfaces of the core member (12). The core member (12) includes a plate member (12A) composed of balsa wood and having a rectangular shape and uniform thickness. Both surfaces of the plate member (12A) in the thickness direction are flat surfaces. Balsa wood is a light weight natural material whereby environmental impact can be reduced. Both surfaces of the plate member (12A) in the thickness direction are impregnated with flame retardant (18), which reduces the flammability of the balsa wood. Impregnation of the plate member (12A) with the flame retardant (18) may be performed by: spraying the flame retardant (18); by immersing the plate member (12A) in the flame retardant (18); or upon the plate member (12A) being immersed in the flame retardant (18), by applying a pressure larger than the pressure at the depth where the plate member (12A) is immersed or cycles thereof to the plate member (12A).

## Description

### Technical Field

The present invention relates to an aircraft interior panel material and a method of manufacturing the same.

### Background Art

Interior components of an aircraft, such as aircraft lavatory units, galleys, luggage compartments, are constituted by panel members. While it is a given that interior panel members for an aircraft, such as floor panels, wall panels, and ceiling panels are required to be strong and rigid, flame retardancy and weight reduction have also been demanded. Such a panel member having a configuration in which a surface member including fiber-reinforced composite material is adhered to both surfaces of a honeycomb core including aramid fiber, glass fiber, aluminum, or the like is known (see Patent Document 1).

### Citation List

### Patent Literature

Patent Document 1: Japanese Unexamined Patent Application Publication No. 2000-238154A

### Summary of Invention

### Technical Problem

However, honeycomb cores tend to be expensive and must be incinerated or buried upon disposal. As such there is room for improvement to reduce the environmental impact of honeycomb cores.
In light of the above, an object of the present invention is to provide an aircraft interior panel material and a method of manufacturing the same which both satisfy cost reduction, strength, rigidity, flame retardancy, and weight reduction requirements and can assist in environmental impact reduction.

### Solution to Problem

To achieve the object described above, the invention of claim 1 is an aircraft interior panel material including a core member; and surface members including fiber-reinforced composite material, the surface members being attached to both surfaces of the core member. In such an aircraft interior panel material, the core member includes a plate member composed of balsa wood, and both surfaces of the plate member are impregnated with a flame retardant.
According to the invention of claim 2, each of the surfaces of the plate member is provided with a plurality of surface-area increasing components recessed from the surface and configured to increase the surface area of the surface.

According to the invention of claim 3, the surface-area increasing components are constituted by any one of: a hole passing through the plate member in the thickness direction thereof, a recessed portion with a closed bottom that has depth in the thickness direction of the plate member, and grooves formed extending in both surfaces of the plate member in the thickness direction of the plate member; or a combination thereof.
The invention of claim 4 is a method of manufacturing an aircraft interior panel material provided with surface members including fiber-reinforced composite material attached to both surfaces of a core member, wherein both surfaces of a plate member to be used as the core member are impregnated with flame retardant.

The invention of claim 5 includes disposing a plurality of surface-area increasing components in each of the surfaces of the plate member prior to impregnation of the surfaces of the plate member with the flame retardant, the surface-area increasing components being recessed from the surface and configured to increase the surface area of the surface.
According to the invention of claim 6, the attaching of the surface members to both surfaces of the core member is performed by:
upon the surface members being layered on both surfaces of the core member, melting resin with which the surface members have been impregnated by applying pressure and heat to bond the resin to the surfaces of the plate member and the surface-area increasing components. According to the invention of claim 7, the impregnation of the surfaces of the plate member with the flame retardant is performed by:
   upon immersing the plate member in the flame retardant and applying a pressure larger than a pressure at a depth where the plate member is immersed to the plate member, maintaining this state for a predetermined period of time.

### Advantageous Effect of Invention

According to the invention of claim 1, because balsa wood, which is inexpensive and easy to handle in terms of disposal and recycling, is used as the core member, advantages in terms of requirements of cost reduction, strength, rigidity, flame retardancy, and weight reduction being satisfied and environmental impact being reduced are obtained.
According to the invention of claim 2, because the surface-area increasing components are provided, the surface area of the plate member to be impregnated with the flame retardant is increased and advantages in terms of securing greater flame retardancy are obtained. In addition, advantages in terms of further weight reduction of the interior components of an aircraft are obtained by reducing the weight of the aircraft interior panel material.
According to the invention of claim 3, because the aircraft interior panel material can be formed with easily machined surface-area increasing components, advantages in terms of cost reduction of the aircraft interior panel material are obtained.
According to the invention of claim 4, because balsa wood, which is inexpensive and easy to handle in terms of disposal and recycling, is used as the core member, advantages in terms of requirements of cost reduction, strength, rigidity, flame retardancy, and weight reduction being satisfied and environmental impact being reduced are obtained.
According to the invention of claim 5, because the surface-area increasing components are provided, the surface area of the plate member to be impregnated with the flame retardant is increased and advantages in terms of securing greater flame retardancy are obtained. In addition, advantages in terms of further weight reduction of the interior components of an aircraft are obtained by reducing the weight of the aircraft interior panel material.
According to the invention of claim 6, because the adhesion area between the surface members and the plate member is increased, the adhesive strength between the surface members and the plate member is increased and advantages in terms of securing the strength of the aircraft interior panel material are obtained.
According to the invention of claim 7, the surfaces of the plate member can be impregnated in a short period of time. As a result, advantages in terms of increasing productivity while maintaining high flame retardancy can be obtained.

### Brief Description of Drawings

- FIG. 1: is a perspective view of an aircraft interior panel material of a first embodiment.
- FIG. 2: is a cross-sectional view of the aircraft interior panel material of the first embodiment.
- FIG. 3: is a perspective view illustrating a flame retardant being sprayed on a plate member composing a core member according to the first embodiment.
- FIG. 4: is an explanatory view illustrating the plate member composing the core member being immersed in the flame retardant according to the first embodiment.
- FIG. 5: is an explanatory view illustrating the plate member composing the core member being immersed in the flame retardant and the flame retardant being pressurized according to the first embodiment.
- FIG. 6: is a perspective view of an aircraft interior panel material of a second embodiment.
- FIG. 7A: is a cross-sectional view of the aircraft interior panel material of the second embodiment; FIG. 7B is an explanatory view illustrating the resin, with which the surface members are impregnated, melted and bonded to surface-area increasing components.
- FIG. 8: is a perspective view of an aircraft interior panel material of a third embodiment.
- FIG. 9: is a cross-sectional view of the aircraft interior panel material of the third embodiment.
- FIG. 10: is a perspective view of an aircraft interior panel material of a fourth embodiment.
- FIG. 11: is a cross-sectional view of the aircraft interior panel material of the fourth embodiment.
- FIG. 12: is an explanatory view showing the experiment results of a first experiment.
- FIG. 13: is an explanatory view showing the experiment results of a second experiment.

### Description of Embodiments

### First Embodiment

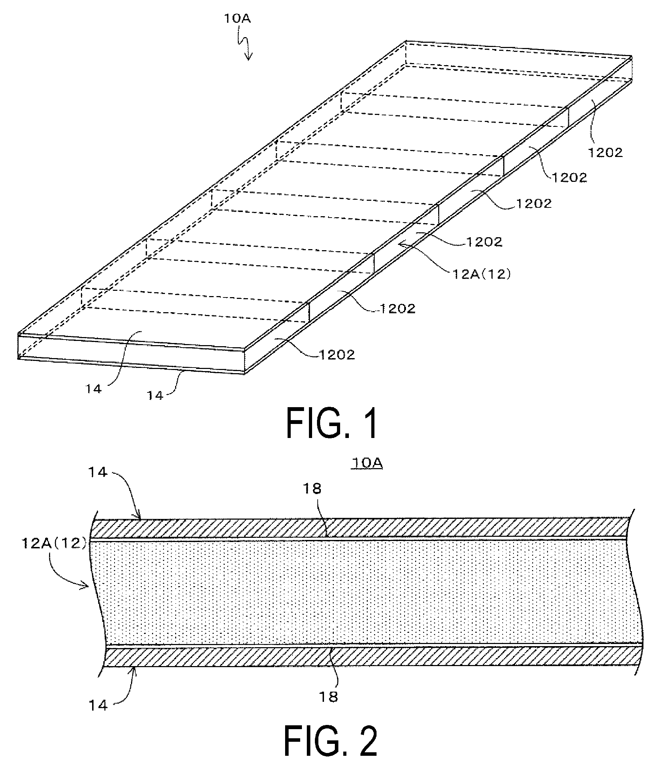

Next, an aircraft interior panel material 10A of the first embodiment is described with reference to FIGS. 1 to 5.
"Aircraft interior panel material" broadly refers to a panel material such as a panel material that composes an aircraft lavatory unit, a panel material that composes a galley, a panel material that composes a luggage compartment, and the like.
As illustrated in FIG. 1, the aircraft interior panel material 10A includes a core member 12, and surface members 14 attached to both surfaces of the core member 12.
The core member 12 includes a plate member 12A composed of balsa wood and having a rectangular shape and uniform thickness. Both surfaces of the plate member 12A in the thickness direction are flat surfaces.
Note that the size of a single plate made from a single piece of timber is limited, and so the plate member 12A is constituted by a combination of single plates.
More specifically, single plates 1202 formed in an elongated shape are lined up in the width direction to form the plate member 12A to a desired size. In addition, as well as lining up the single plates 1202 in the width direction, the single plates 1202 may also be layered in the thickness direction to form the plate member 12A to a desired thickness. In such a case, adjacent single plates 1202 may be adhered together at end surfaces thereof by adhesive, and layered single plates 1202 may be adhered together at side surfaces thereof by adhesive.
Balsa wood is light weight and strong and can be easily machined due to its softness. Moreover, balsa wood is a natural material, which means that it is easy to handle in terms of disposal and recycling, therefore assisting in environmental impact reduction.
From the perspective of obtaining a good strength-to-weight ratio, the specific gravity of the balsa wood used is preferably from 0.090 to 0.26, both inclusive, and more preferably from 0.090 to 0.10, both inclusive.
In addition, from the perspective of enhancing strength, the balsa wood is preferably used with the surfaces perpendicular to the grain of the plate (end grain surfaces) as the surfaces of the core member 12 on which the surface members 14 are disposed.

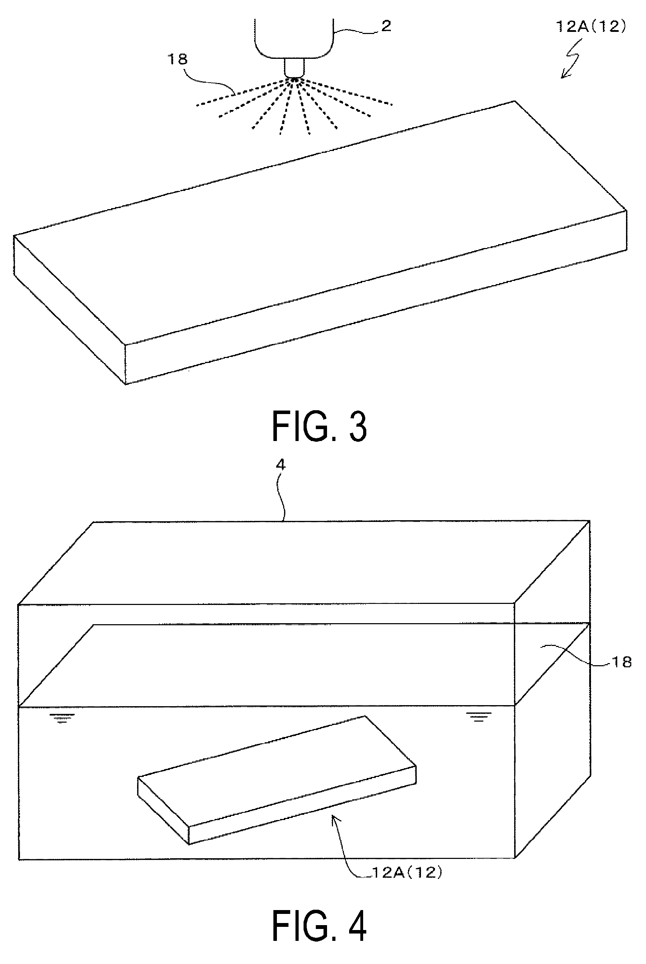

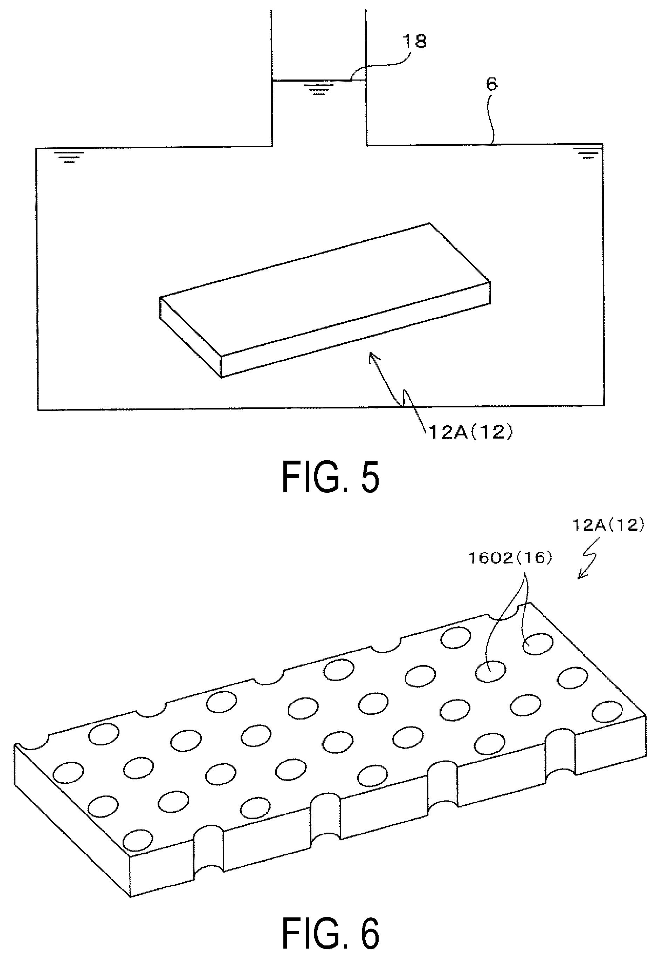

As illustrated in FIG. 2, both surfaces of the plate member 12A in the thickness direction are impregnated with flame retardant 18, which reduces the flammability of the balsa wood.
Known flame retardants for wood such as phosphoric acid based, boric acid based, silicic acid based, aluminum based, and iron based flame retardants can be used as the flame retardant 18.
Various methods of impregnating both surfaces of the plate member 12A in the thickness direction with the flame retardant 18 can be considered.
For example, a sprayer 2 may be used to spray the flame retardant 18 on both surfaces of the plate member 12A, as illustrated in FIG. 3, or the flame retardant 18 may be applied to both surfaces of the plate member 12A.
Alternatively, the plate member 12A may be immersed in the flame retardant 18 inside a container 4, as illustrated in FIG. 4.
As another alternative, as illustrated in FIG. 5, the plate member 12A, upon being immersed in the flame retardant 18 in a container 6, may be subjected to static pressure larger than the pressure (water pressure) at the depth where the plate member 12A is immersed, or cycles of static pressure larger than the pressure (water pressure) at the depth where the plate member 12A is immersed. By subjecting the plate member 12A to pressure larger than the pressure at the depth where the plate member 12A is immersed, the surfaces of the plate member 12A can be impregnated in a short period of time. As a result, advantages in terms of increasing productivity while maintaining high flame retardancy are obtained.

As illustrated in FIGS. 1 and 2, the surface members 14 have the same shape and dimensions as the plate member 12A and are disposed adhered to both surfaces of the plate member 12A in the thickness direction.
Fiber-reinforced composite material may be used as the surface members 14. As such a fiber-reinforced composite material, a sheet-like prepreg composed of glass/aramid/carbon fabric or fiber that has been impregnated with phenolic resin or epoxy resin may be used.
In addition, the surface members 14 are attached to both surfaces of the plate member 12A in the thickness direction by: layering the surface members 14 on both surfaces of the plate member 12A in the thickness direction, and then applying pressure and heat to the surface members 14, thereby causing the resin with which the surface members 14 have been impregnated to thermally cured and adhering the surface members 14 to both surfaces of the plate member 12A in the thickness direction.

According to the aircraft interior panel material 10A of the present embodiment, because balsa wood, which is both light weight and strong and easily machined due to its softness, is used as the core member 12, great advantages in terms of weight reduction of interior components of an aircraft, such as aircraft lavatory units, galleys, luggage compartments, and the like, are obtained.
In addition, because balsa wood, which is inexpensive and easy to handle in terms of disposal and recycling, is used as the core member 12, advantages in terms of both reducing the cost of the interior components of an aircraft and the environmental impact are obtained.
In addition, because the surfaces of the plate member 12A are impregnated with the flame retardant 18, advantages in terms of ensuring the high flame retardancy of the interior components of an aircraft are obtained.

### Second Embodiment

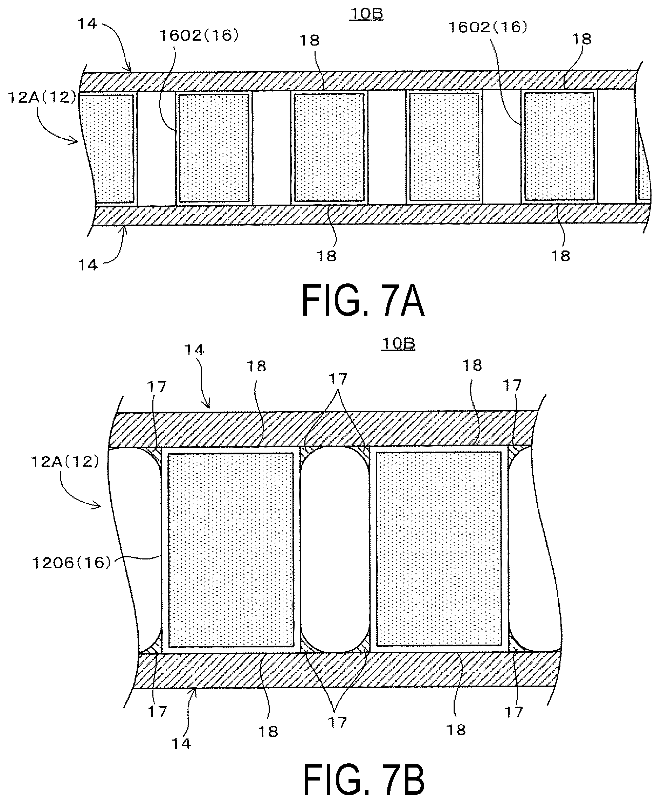

Next, an aircraft interior panel material 10B of the second embodiment is described with reference to FIGS. 6 and 7A, 7B.
In this embodiment, components identical to those of the first embodiment are assigned identical reference numerals, and detailed descriptions thereof are omitted.
Note that in the following embodiment, the configuration of the core member 12 is different from that of the first embodiment, and the configurations of the components other than the core member 12 are similar to those of the first embodiment.
In the second embodiment, a plurality of surface-area increasing components 16 are provided in the plate member 12A that composes the core member 12. The surface-area increasing components 16 are recessed from the surfaces of the plate member 12A to increase the surface area thereof.
In the present embodiment, each of the surface-area increasing components 16 is constituted by a hole 1602 that passes through the plate member 12A in the thickness direction.
The form of the hole 1602 in the plate member 12A is made using a machining tool such as a drilling machine, for example.
In addition, as illustrated in FIG. 7A, both surfaces of the plate member 12A in the thickness direction and the inner circumferential surfaces of the holes 1602 are impregnated with the flame retardant 18, which reduces the flammability of the balsa wood.
The method of impregnating the plate member 12A with the flame retardant 18 and the attachment of the surface members 14 to the plate member 12A are similar to that of the first embodiment.
According to the aircraft interior panel material 10B of the second embodiment, a similar effect as that of the first embodiment is obtained. As well as this effect, advantages in terms of securing greater flame retardancy are obtained because the surface area of the plate member 12A impregnated with the flame retardant 18 is increased. In addition, advantages in terms of further weight reduction of the interior components of an aircraft are obtained by providing a plurality of surface-area increasing components 16 for the purpose of reducing weight of the aircraft interior panel material 10B.
In addition, because the surface-area increasing components 16 (holes 1602) are recessed from the surfaces of the plate member 12A, the adhesion area therebetween increases. This is because in the case of the surface members 14, each constituted by a sheet-like prepreg, being layered on both surfaces of the plate member 12A in the thickness direction then the surface members 14 being adhered to both surfaces of the plate member 12A in the thickness direction by applying pressure and heat, the resin with which the surface members 14 have been impregnated melts and bonds to the surface of the plate member 12A and the surface-area increasing components 16 (holes 1602). Resin with which the surface members 14 have been impregnated in the state of being melted and bonded to the surface-area increasing components 16 (holes 1602) is illustrated in FIG. 7B by hatching and the reference sign 17. As a result of this configuration, the adhesive strength between the surface members 14 and the plate member 12A is enhanced and advantages in terms of ensuring the strength of the aircraft interior panel material 10B are obtained.

### Third Embodiment

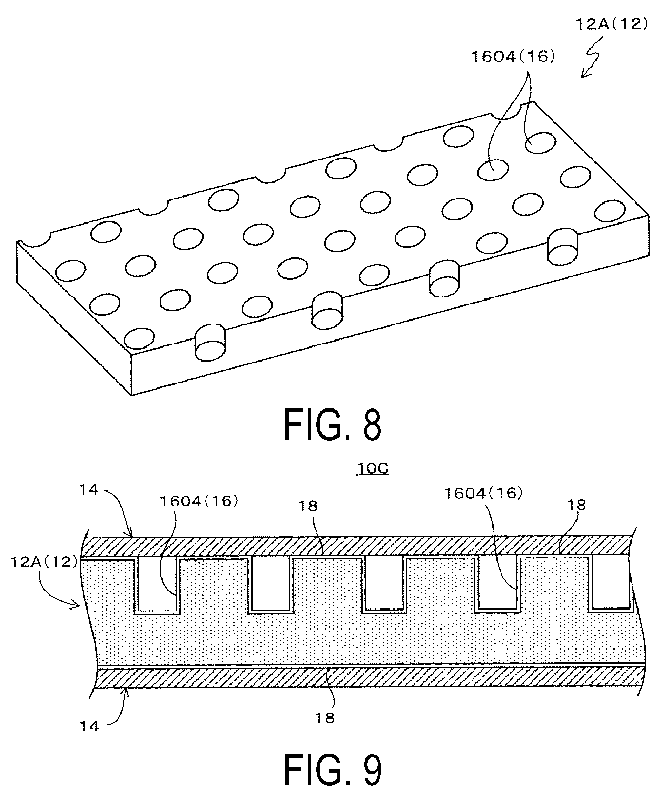

Next, an aircraft interior panel material 10C of the third embodiment is described with reference to FIGS. 8 and 9.
In the third embodiment, the configuration of the surface-area increasing component 16 is different from that of the second embodiment, and the configurations of the components other than the surface-area increasing component 16 are similar to those of the second embodiment.
Specifically, the surface-area increasing component 16 is constituted by a recessed portion 1604 with a closed bottom that has depth in the thickness direction of the plate member 12A.
The recessed portion 1604 may be formed on only one surface of the plate member 12A in the thickness direction or may be formed on both surfaces in the thickness direction.
The form of the recessed portion 1604 in the plate member 12A is made using a machining tool such as a drilling machine, for example.
Both surfaces of the plate member 12A in the thickness direction and the inner circumferential surfaces and bottom surfaces of the recessed portions 1604 are impregnated with the flame retardant 18, which reduces the flammability of the balsa wood.
The method of impregnating the plate member 12A with the flame retardant 18 and the attachment of the surface members 14 to the plate member 12A are similar to those of the first embodiment.
According to the aircraft interior panel material 10C of the third embodiment, a similar effect as that of the second embodiment is obtained. In addition, because the surface-area increasing components 16 (recessed portions 1604) are recessed from the surfaces of the plate member 12A, the adhesion area therebetween increases. This is because in the case of the surface members 14, each constituted by a sheet-like prepreg, being layered on both surfaces of the plate member 12A in the thickness direction then the surface members 14 being adhered to both surfaces of the plate member 12A in the thickness direction by applying pressure and heat, the resin with which the surface members 14 have been impregnated melts and bonds to the surface of the plate member 12A and the surface-area increasing components 16 (recessed portions 1604). As a result of this configuration, the adhesive strength between the surface members 14 and the plate member 12A is enhanced and advantages in terms of ensuring the strength of the aircraft interior panel material 10C are obtained.

### Fourth Embodiment

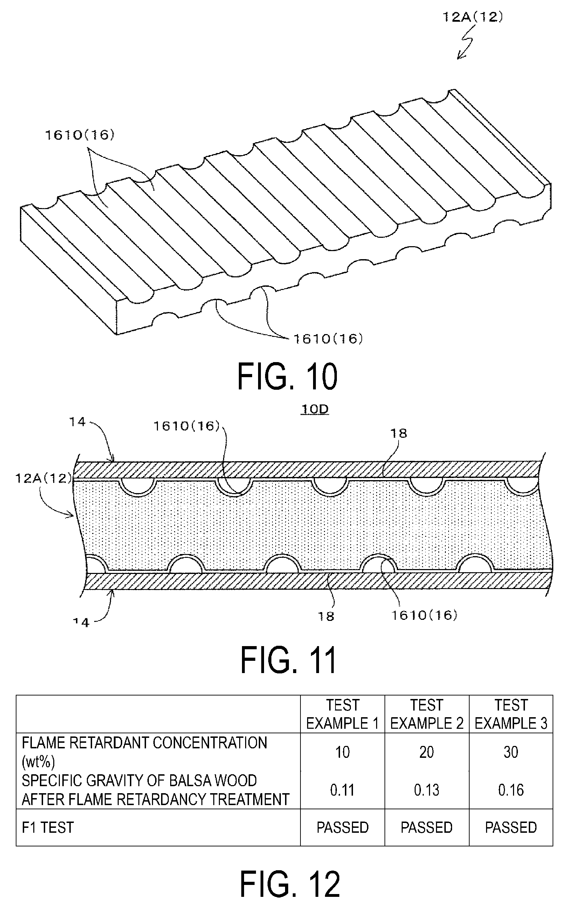

Next, an aircraft interior panel material 10D of the fourth embodiment is described with reference to FIGS. 10 and 11.
In the fourth embodiment, the configuration of the surface-area increasing component 16 is different from those of the second and third embodiments, and the configurations of the components other than the surface-area increasing component 16 are similar to those of the second and third embodiments.
Specifically, the surface-area increasing component 16 is constituted by grooves 1610 formed extending in both surfaces of the plate member 12A in the thickness direction.
The form of the grooves 1610 in the plate member 12A is made using a machining tool such as a milling machine, for example.
Both surfaces (outer surfaces) of the plate member 12A in the thickness direction and the surface of the plurality of grooves 1610 are impregnated with the flame retardant 18, which reduces the flammability of the balsa wood.
Both surfaces of the plate member 12A in the thickness direction and the surface of the grooves 1610 are impregnated with the flame retardant 18, which reduces the flammability of the balsa wood.
The method of impregnating the plate member 12A with the flame retardant 18 and the attachment of the surface members 14 to the plate member 12A are similar to those of the first embodiment.

Note that in the fourth embodiment, as illustrated in FIG. 11, the grooves 1610 formed extending in one surface of the plate member 12A in the thickness direction that faces a surface member 14 are offset from the grooves 1610 formed extending in the other surface in a manner such that the grooves 1610 are located alternating in position in the direction perpendicular to the extension direction the grooves 1610. Consequently, advantages in terms of maintaining uniform thickness and strength of the core member 12 are obtained.

According to the aircraft interior panel material 10D of the fourth embodiment, a similar effect as those of the second and third embodiments is of course obtained. In addition, advantages in terms of cost and machining time reduction are obtained compared to the case, such as in the second and third embodiments, in which a drilling machine is used to form the holes 1602 or recessed portions 1604 in the plate member 12A because a milling machine can be used to form the grooves 1610 in the plate member 12A in a short period of time.
In addition, because the surface-area increasing components 16 (grooves 1610) are recessed from the surfaces of the plate member 12A, the adhesion area therebetween increases. This is because in the case of the surface members 14, each constituted by a sheet-like prepreg, being layered on both surfaces of the plate member 12A in the thickness direction then the surface members 14 being adhered to both surfaces of the plate member 12A in the thickness direction by applying pressure and heat, the resin the surface members 14 have been impregnated melts and bonds to the surface of the plate member 12A and the surface-area increasing components 16 (grooves 1610). As a result of this configuration, the adhesive strength between the surface members 14 and the plate member 12A is enhanced and advantages in terms of ensuring the strength of the aircraft interior panel material 10D are obtained.

Note that in the description of the second to fourth embodiments, the surface-area increasing component 16 constituted by any one of: the hole 1602, the recessed portion 1604, and the groove 1610 is described. However, the surface-area increasing components 16 may be constituted by any one of the hole 1602, the recessed portion 1604, and the groove 1610 or by a combination thereof.

Next, experiment results relating to the aircraft interior panel material of the present embodiment is explained.
A first experiment and second experiment were performed as described below.
The first experiment was a flammability test for the case in which the surfaces of the plate member 12A were impregnated with the flame retardant by immersing the plate member 12A in a solution of the flame retardant and applying no pressure load to the plate member 12A.
The second experiment was a flammability test for the case in which the surfaces of the plate member 12A were impregnated with the flame retardant by immersing the plate member 12A in a solution of the flame retardant then applying a large water pressure to the solution.

### First Experiment

In the first experiment, sample aircraft interior panel materials 10A according to the first embodiment were manufactured as described below. The samples were tested via the vertical flammability test (hereafter referred to as "F1 test") for 60 seconds as specified in the Federal Aviation Regulations (FAR) 25.853 Appendix F Part I (a)(i). The results of the aircraft interior panel materials 10A satisfied the flame retardancy requirements.
Passing requirements for the F1 test was a self-extinguishing time of 15 seconds or less, a burn length of 6 inches or less, and flaming time of drippings of 3 seconds or less.
The manufactured aircraft interior panel materials 10A were configured as follows.
Rectangular plate-like plate members 12A 31 x 8 cm in size, 1 cm thick, and with a specific gravity of approximately 0.1 were immersed in solutions of boric acid based flame retardant of different concentrations for 24 hours, thereby impregnating the surfaces of the plate members 12A with the flame retardant. The resulting specific gravity of the core members 12 was from 0.11 to 0.16, both inclusive.

Next, the above-described flammability test is described in detail.
Specific gravity of plate member 12A prior to treatment: 0.098
Plate member 12A trade name: BALTEK® SB (SB.50)
Plate member 12A manufacturer: 3A Composites
Flame retardant 18 trade name: Fireless B®
Flame retardant 18 manufacturer: TRUST LIFE CORPORATION
Core member 12 treatment method after immersion in solution of flame retardant 18 of each concentration: Dried at room temperature

In the flammability test described above, as illustrated in FIG. 12, the concentration of the flame retardant 18 was varied to manufacture the flammability test samples of Test Example 1 to 3.
Note that the flammability test samples are each constituted by the core member 12 impregnated with the flame retardant 18 described above, and the surface members 14 described below adhered to both surfaces of the core member 12.
Surface members 14: Glass/phenolic prepreg
As indicated in FIG. 12, the Test Examples 1, 2, and 3 passed the F1 test.

### Second Experiment

In the second experiment, sample aircraft interior panel materials 10A according to the first embodiment were manufactured under the immersion conditions described below. The samples were tested via the F1 test in a similar manner to that of the first experiment. The results of the aircraft interior panel materials 10A satisfied the flame retardancy requirements. The manufactured aircraft interior panel materials 10A were configured as follows.

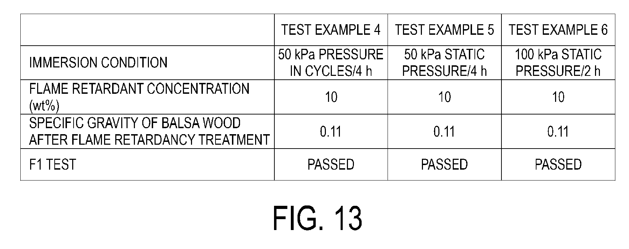

Rectangular plate-like plate members 12A 31 x 8 cm in size, 1 cm thick, and with a specific gravity of approximately 0.1 were immersed in a solution of boric acid based flame retardant of 10 wt% concentration under the immersion conditions described below, thereby impregnating the surfaces of the plate members 12A with the flame retardant. The resulting specific gravity of the core members 12 was approximately 0.11.
The details of the above-described flammability test are similar to that of the first experiment.
In the flammability test described above, as illustrated in FIG. 13, the immersion conditions were varied to manufacture the flammability test samples of Test Example 4 to 6.
Note that the flammability test samples, in a similar manner to that of the first experiment, are each constituted by the core member 12 impregnated with the flame retardant 18 described above, and glass/phenolic prepreg surface members 14 adhered to both surfaces of the core member 12.

Immersion conditions were as follows.
Test Example 4: As illustrated in FIG. 5, the plate member 12A was immersed in the flame retardant 18 inside the container 6, and water pressure of 50 kPa was applied for 5 minutes. Then, the loaded water pressure was removed for 1 minute. This cycle was repeated for 4 hours. Test Example 5: The plate member 12A was immersed in the flame retardant 18 inside the container 6, and water pressure (static pressure) of 50 kPa was applied for 4 hours.
Test Example 6: The plate member 12A was immersed in the flame retardant 18 inside the container 6, and water pressure (static pressure) of 100 kPa was applied for 2 hours.
As indicated in FIG. 13, the Test Examples 4, 5, and 6 passed the F1 test. It is clear from the results that by immersing the plate member 12A in a solution of the flame retardant 18 and then applying a large water pressure to the solution, the surfaces of the plate member 12A can be impregnated with the flame retardant 18 in a short period of time (approximately 2 to 4 hours), resulting in advantages in terms of increasing productivity while maintaining the flame retardancy of the aircraft interior panel material 10A.

### Reference Signs List

10A, 10B, 10C, 10D Aircraft interior panel material
12 Core member
12A Plate member
14 Surface member
16 Surface-area increasing component
1602 Hole
1604 Recessed portion
1610 Groove
18 Flame retardant

## Claims

1. An aircraft interior panel material comprising:
a core member; and
surface members including fiber-reinforced composite material, the surface members being attached to both surfaces of the core member, wherein
the core member includes a plate member composed of balsa wood; and
both surfaces of the plate member are impregnated with a flame retardant.

2. The aircraft interior panel material according to claim 1, wherein
each of the surfaces of the plate member is provided with a plurality of surface-area increasing components recessed from the surface and configured to increase the surface area of the surface.

3. The aircraft interior panel material according to claim 2, wherein
the surface-area increasing components are constituted by any one of: a hole passing through the plate member in a thickness direction thereof, a recessed portion with a closed bottom that has depth in the thickness direction of the plate member, and grooves formed extending in both surfaces of the plate member in the thickness direction of the plate member; or a combination thereof.

4. A method of manufacturing an aircraft interior panel material provided with surface members including fiber-reinforced composite material attached to both surfaces of a core member, wherein
both surfaces of a plate member to be used as the core member are impregnated with flame retardant.

5. The method of manufacturing an aircraft interior panel material according to claim 4, further comprising:
disposing a plurality of surface-area increasing components in each of the surfaces of the plate member prior to impregnation of the surfaces of the plate member with the flame retardant, the surface-area increasing components being recessed from the surface and configured to increase the surface area of the surface.

6. The method of manufacturing an aircraft interior panel material according to claim 5, wherein
the attaching of the surface members to both surfaces of the core member is performed by:
upon the surface members being layered on both surfaces of the core member, melting resin with which the surface members have been impregnated by applying pressure and heat to bond the resin to the surfaces of the plate member and the surface-area increasing components.

7. The method of manufacturing an aircraft interior panel material according to any one of claims 4 to 6, wherein
the impregnation of the surfaces of the plate member with the flame retardant is performed by:
upon immersing the plate member in the flame retardant and applying a pressure larger than a pressure at a depth where the plate member is immersed to the plate member, maintaining this state for a predetermined period of time.
